# EUROPEAN PATENT APPLICATION

(11) **EP 4 836 013 A1**
(43) Date of publication of application: **04.11.2026**
(21) Application number: 24912433.0
(22) Date of filing: 13.12.2024
(51) Int. Cl.: H01M 4/58, H01M 6/52, H01M 10/54

(54) **REGENERATED POSITIVE ELECTRODE ACTIVE MATERIAL, LITHIUM ION SECONDARY BATTERY CONTAINING SAME, AND METHOD OF PRODUCING REGENERATED POSITIVE ELECTRODE ACTIVE MATERIAL**

(30) Priority: 26.12.2023 JP 2023219924
(71) Applicant: FUJIFILM Corporation, Tokyo 106-8620 (JP)
(72) Inventor: KAMADA, Toshihiro, Minamiashigara-shi, Kanagawa 250-0193 (JP); YAWATA, Toshihiko, Minamiashigara-shi, Kanagawa 250-0193 (JP); OZAWA, Shin, Minamiashigara-shi, Kanagawa 250-0193 (JP); TOKAIRIN, Masatoshi, Minamiashigara-shi, Kanagawa 250-0193 (JP)
(74) Representative: HGF
(86) International application number: PCT/JP2024/044152
(87) International publication number: WO 2025/142544

(57) **Abstract**

Provided are a regenerated positive electrode active material obtained by replenishing lithium in a lithium-deficient positive electrode active material (a), in which, in an oxygen 1s core-level spectrum by XPS measurement of the regenerated positive electrode active material, a value of a ratio of a peak intensity in a region of 528 eV or more and less than 530 eV to a peak intensity in a region of 530 eV or more and less than 535 eV is 0.005 or less, a lithium ion secondary battery including the same, and a method for producing a regenerated positive electrode active material, the method including obtaining a regenerated positive electrode active material by mixing (a), a lithium compound (b), and a reducing agent (c) at 0.13 ≤ (b)/(c) ≤ 2.80 (molar ratio).

## Description

### BACKGROUND OF THE INVENTION

### 1. Field of the Invention

The present invention relates to a regenerated positive electrode active material, a lithium ion secondary battery including the same, and a method for producing a regenerated positive electrode active material.

### 2. Description of the Related Art

A lithium ion secondary battery (LIB) has a high energy density, excellent storage performance, low-temperature operability, and the like, and is widely used in portable electronic devices such as a mobile phone and a laptop. In addition, the battery has been enlarged and been used in transportation equipment such as automobiles, and the use of the battery as a storage device for nighttime power, power generated by natural energy, and the like has also been promoted.

A positive electrode of a lithium ion secondary battery generally has a positive electrode active material layer, and the positive electrode active material layer contains positive electrode active material particles capable of intercalating or deintercalating lithium ions during charging and discharging. The positive electrode active material layer is usually formed by preparing a slurry (composition) containing a constituent component of the positive electrode active material layer such as a positive electrode active material, and applying and drying the slurry.

The positive electrode active material is an important material that determines a battery capacity, but it is known that the positive electrode active material deteriorates due to long-term operation of the lithium ion secondary battery. It is considered that the reason for this is that lithium ions that are deintercalated from the positive electrode active material during charging and move to a negative electrode side do not return completely to the positive electrode active material from the negative electrode during discharging, and the lithium ions are in a state of being deficient in the positive electrode active material (the positive electrode active material is a lithium-deficient positive electrode active material) in a case where charging and discharging are repeated.

With the rapid spread of the lithium ion secondary battery, there is an increasing interest in a recycling technique of a constituent material of the lithium ion secondary battery. Among these, a relithiation technique for regenerating a lithium-deficient positive electrode active material in a used lithium ion secondary battery by directly replenishing lithium therein has been attracting attention.

For example, US9287552B discloses a method of subjecting an electrode material in a lithium-deficient state to a hydrothermal reaction in a solution containing lithium ions, and as a specific example thereof, it is disclosed that an electrode material containing LiCoO₂ is heated at 100°C to 300°C for 12 to 48 hours in about 4 M of lithium hydroxide.

In addition, JP2023-502220A discloses a method of electrochemical alkalization of an electrochemical active material, the method including a step of adding the electrochemical active material to a solution containing a reducing agent and an alkali metal salt in a solvent to produce an alkalized electrochemical active material. In this method, it is described that a redox pair is used as a reducing agent.

### SUMMARY OF THE INVENTION

As a result of studies by the present inventors, it has been found that a regenerated positive electrode active material obtained by relithiation may have an insufficient relithiation rate, and in a case where a lithium ion secondary battery is produced using the regenerated positive electrode active material, the obtained lithium ion secondary battery is likely to have a decreased discharge capacity in a case of being exposed to a high temperature.

An object of the present invention is to provide a regenerated positive electrode active material obtained by replenishing lithium in a lithium-deficient positive electrode active material generated by use of a lithium ion secondary battery, in which the regenerated positive electrode active material is reused as a positive electrode active material of the lithium ion secondary battery, and thus a lithium ion secondary battery exhibiting an excellent discharge capacity even in a case of being exposed to a high temperature can be obtained, and a lithium ion secondary battery including the regenerated positive electrode active material. In addition, another object of the present invention is to provide a method for producing the regenerated positive electrode active material.

As a result of repeated studies on the relithiation of the lithium-deficient positive electrode active material, the present inventors have found that an oxide film is formed as a byproduct on a surface of the regenerated positive electrode active material with relithiation, and in a case where the regenerated positive electrode active material on which the oxide film is formed is incorporated into a lithium ion secondary battery, a sufficient discharge capacity cannot be achieved in a case where the secondary battery is exposed to a high temperature. The invention has been further studied based on these findings, and has been completed.

That is, the above-described object has been achieved by the following means.
[1] A regenerated positive electrode active material obtained by replenishing lithium in a lithium-deficient positive electrode active material (a),
   in which, in an oxygen 1s core-level spectrum measured by XPS measurement of the regenerated positive electrode active material, a value of a ratio of a peak intensity in a region of 528 eV or more and less than 530 eV to a peak intensity in a region of 530 eV or more and less than 535 eV is 0.005 or less.
[2] The regenerated positive electrode active material according to [1], in which the lithium-deficient positive electrode active material (a) has an olivine-type structure.
[3] The regenerated positive electrode active material according to [1] or [2], in which the lithium-deficient positive electrode active material (a) is an active material represented by Li₁₋ₓM¹PO₄, x represents a lithium deficiency amount and satisfies 0 < x ≤ 1, and M¹ represents at least one element selected from Fe, Mn, and Co.
[4] A lithium ion secondary battery comprising the regenerated positive electrode active material according to any one of [1] to [3].
[5] A method for producing a regenerated positive electrode active material, the method comprising replenishing lithium in a lithium-deficient positive electrode active material (a) by mixing the lithium-deficient positive electrode active material (a), a lithium compound (b), and a reducing agent (c) such that a molar ratio of (b) to (c) is 0.13 ≤ (b)/(c) ≤ 2.80 to obtain the regenerated positive electrode active material.
[6] The method for producing a regenerated positive electrode active material according to [5], in which an amount of the lithium compound (b) to be blended is 10 molar equivalents or more with respect to a lithium deficiency amount of the lithium-deficient positive electrode active material (a).
[7] The method for producing a regenerated positive electrode active material according to [5] or [6], in which the lithium-deficient positive electrode active material (a), the lithium compound (b), and the reducing agent (c) are heated at 80°C to 100°C.
[8] The method for producing a regenerated positive electrode active material according to [7], in which solid particles obtained after the heating are filtered and washed.
[9] The method for producing a regenerated positive electrode active material according to [7] or [8], in which solid particles obtained after the heating are calcined at 400°C or higher.
[10] The method for producing a regenerated positive electrode active material according to any one of [5] to [9], in which the lithium-deficient positive electrode active material (a) has an olivine-type structure.
[11] The method for producing a regenerated positive electrode active material according to any one of [5] to [10], in which the lithium-deficient positive electrode active material (a) is a positive electrode active material represented by Li₁₋ₓM¹PO₄, x represents a lithium deficiency amount and satisfies 0 < x ≤ 1, and M¹ represents at least one element selected from Fe, Mn, and Co.

In the regenerated positive electrode active material according to the embodiment of the present invention, formation of an oxide film due to the relithiation is suppressed, and in a case of being incorporated into a lithium ion secondary battery, the regenerated positive electrode active material enables the resulting lithium ion secondary battery to exhibit excellent discharge capacity even in a case of being exposed to a high temperature. The lithium ion secondary battery according to the embodiment of the present invention exhibits an excellent discharge capacity even in a case of being exposed to a high temperature, even in a case where the regenerated positive electrode active material is used. In addition, according to the method for producing a regenerated positive electrode active material according to the embodiment of the present invention, formation of an oxide film due to the relithiation is suppressed, and a regenerated positive electrode active material can be obtained which, in a case of being incorporated into a lithium ion secondary battery, enables the resulting lithium ion secondary battery to exhibit excellent discharge capacity even in a case of being exposed to a high temperature.

### BRIEF DESCRIPTION OF THE DRAWINGS

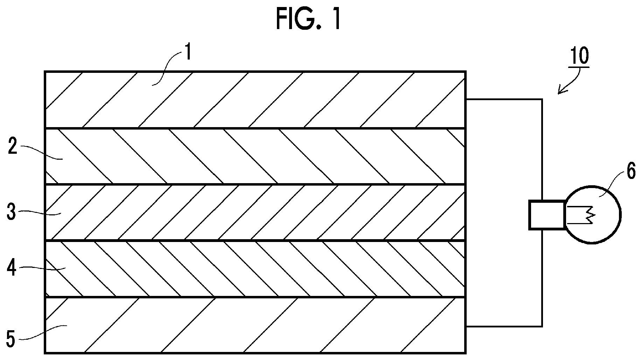

FIG. 1 is a longitudinal cross-sectional view schematically showing a basic laminated configuration of an embodiment of a lithium ion secondary battery according to the present invention.

### DESCRIPTION OF THE PREFERRED EMBODIMENTS

In the present invention, a numerical range represented by "to" refers to a range including numerical values described before and after "to" as a lower limit value and an upper limit value.

In the present invention, in a case where a component composition is described, unless otherwise specified, each component may be contained in an amount of one kind or two or more kinds.

In the present invention, the "secondary battery" means a device in which ions move between a positive electrode and a negative electrode through an electrolyte by charging and discharging, and energy is stored and released in the positive electrode and the negative electrode. That is, in the present invention, "secondary battery" has a meaning including both the battery and capacitor (for example, a lithium ion capacitor). In a case where the ions are lithium ions, the secondary battery is a lithium ion secondary battery.

The secondary battery can be roughly classified into an aqueous secondary battery and a non-aqueous secondary battery depending on the electrolyte to be used, and in the present invention, a non-aqueous secondary battery is preferable. In the present invention, the "aqueous secondary battery" means a secondary battery in which an aqueous electrolytic solution is used as an electrolyte. In the present invention, "non-aqueous secondary battery" has a meaning including a non-aqueous electrolytic solution secondary battery and an all-solid-state secondary battery. In the present invention, the "non-aqueous electrolytic solution secondary battery" means a secondary battery in which a non-aqueous electrolytic solution is used as an electrolyte. In the present invention, "non-aqueous electrolytic solution" means an electrolytic solution which does not substantially contain water. The electrolytic solution that does not substantially contain water means that the "non-aqueous electrolytic solution" may contain a trace amount of water within a range in which the effects of the present invention are not impaired. The concentration of water in the "non-aqueous electrolytic solution" in the present invention is 200 ppm (based on mass) or less, preferably 100 ppm or less, and more preferably 20 ppm or less. It should be noted that the content of water in the non-aqueous electrolytic solution is usually 1 ppm or more, because it is practically difficult to make an absolutely anhydrous non-aqueous electrolytic solution.

### [Regenerated positive electrode active material]

The regenerated positive electrode active material according to the embodiment of the present invention is a regenerated positive electrode active material obtained by replenishing lithium in a lithium-deficient positive electrode active material (a).

Here, the lithium-deficient positive electrode active material (a) means a positive electrode active material in a state in which at least a part of lithium in a chemical equivalent derived from an element composition of a compound is deficient and the amount of lithium is smaller than the chemical equivalent. The amount (molar amount) of lithium contained in the lithium-deficient positive electrode active material (a) is preferably 0.1 to 0.9 times, more preferably 0.2 to 0.8 times, and still more preferably 0.3 to 0.7 times the amount (molar amount) of lithium in the positive electrode active material in which lithium is not deficient.

In the regenerated positive electrode active material according to the embodiment of the present invention, in an oxygen 1s core-level spectrum measured by X-ray photoelectron spectroscopy (XPS), a value (I_{B}/I_{A}) of a ratio of a peak intensity (I_{B}) in a region of 528 eV or more and less than 530 eV to a peak intensity (I_{A}) in a region of 530 eV or more and less than 535 eV is 0.005 or less.

The peak in the region of 530 eV or more and less than 535 eV is a peak derived from the positive electrode active material (for example, LiFePO₄), and the peak in the region of 528 eV or more and less than 530 eV is a peak derived from an oxide film formed on the surface of the positive electrode active material (for example, a Fe₂O₃ film formed on LiFePO₄). Therefore, the fact that the value (I_{B}/I_{A}) of the ratio of the peak intensities of these peaks is 0.005 or less means that the oxide film is not formed on the surface of the regenerated positive electrode active material or that the amount of the oxide film formed is small.

The method of the XPS measurement will be described in Examples later.

In a case where the regenerated positive electrode active material according to the embodiment of the present invention is used as a positive electrode active material of a lithium ion secondary battery, a lithium ion secondary battery having an excellent discharge capacity retention rate can be obtained.

In the regenerated positive electrode active material according to the embodiment of the present invention, I_{B}/I_{A} is preferably 0.004 or less, more preferably 0.003 or less, still more preferably 0.002 or less, and even still more preferably 0.001 or less. I_{B}/I_{A} can be set to 0 (0.000), and it is particularly preferable that I_{B}/I_{A} is 0. Here, the case where I_{B}/I_{A} is 0 is a case where a peak derived from the oxide film is not observed.

The lithium-deficient positive electrode active material (a) which is a raw material of the regenerated positive electrode active material according to the embodiment of the present invention is derived from a metal oxide which is usually used as a positive electrode active material of a lithium ion secondary battery. In the lithium ion secondary battery, a lithium-containing transition metal oxide is often used as the positive electrode active material (for example, refer to JP2023-106633A). Among these, examples thereof include (MA) a lithium-containing transition metal oxide having a layered rock-salt structure, (MB) a lithium-containing transition metal oxide having a spinel-type structure, (MC) a lithium-containing transition metal phosphate compound, (MD) a lithium-containing transition metal halogen phosphate compound, and (ME) a lithium-containing transition metal silicate compound. In the present invention, (MC) the lithium-containing transition metal phosphate compound is preferable, and among these, a lithium-containing transition metal phosphate compound having an olivine-type structure is preferable. Specific examples of the lithium-containing transition metal phosphate compound having an olivine-type structure include iron phosphate salts such as LiFePO₄ and Li₃Fe₂(PO₄)₃.

The lithium-deficient positive electrode active material (a) is preferably a positive electrode active material containing a lithium-containing transition metal phosphate compound, and is more preferably a positive electrode active material represented by Li₁₋ₓM¹PO₄ (x represents a lithium deficiency amount and satisfies 0 < x ≤ 1, and M¹ represents at least one element selected from Fe, Mn, and Co). M¹ is preferably an element selected from Fe and Mn, and it is more preferably Fe.

The positive electrode active material (positive electrode active material containing lithium in a chemical equivalent) in which lithium is not deficient and corresponds to the lithium-deficient positive electrode active material (a) represented by Li₁₋ₓM¹PO₄ is a positive electrode active material represented by LiM¹PO₄. In a case where Li is completely deficient due to charging and discharging, the positive electrode active material is represented by M¹PO₄.

The lithium-deficient positive electrode active material (a) can be obtained by recovering the positive electrode active material from the used lithium ion secondary battery. The recovery method will be described later.

A relithiation rate of the regenerated positive electrode active material is preferably 0.80 or more, more preferably 0.90 or more, still more preferably 0.93 or more, even more preferably 0.95 or more, even still more preferably 0.97 or more, and most preferably 0.99 or more.

The relithiation rate can be determined by the method described in Examples.

The regenerated positive electrode active material may be a single regenerated positive electrode active material, or may contain a trace amount of a binder and/or a conductive auxiliary agent that is not removed by the regeneration treatment in addition to the regenerated positive electrode active material. The regenerated positive electrode active material usually contains a trace amount of a binder and/or a conductive auxiliary agent, and in this case, the entire material containing a trace amount of a binder and/or a conductive auxiliary agent is the "regenerated positive electrode active material" according to the embodiment of the present invention. In a case where a positive electrode active material having no lithium deficiency contains a trace amount of a binder, a conductive auxiliary agent, or the like, it can be determined that the positive electrode active material is a regenerated product (that is, a regenerated positive electrode active material).

A content of the binder in the regenerated positive electrode active material is preferably 0.5% by mass or less. The content of the binder can be determined by thermogravimetry-differential thermal analysis (TG-DTA). An example is shown below.

The dried product of the regenerated positive electrode active material (a product obtained by removing moisture by allowing the product to stand at 120°C for 12 hours) is heated from 25°C at a rate of 5°C/min in a nitrogen atmosphere, and after reaching 600°C, a mass reduction amount after allowing the product to stand at 600°C for 1 hour is measured. More specifically, the measurement is performed as follows.

5 mg of a dried product sample of the regenerated positive electrode active material is placed in a sample pan for a thermogravimetry-differential thermal simultaneous analysis device (manufactured by Shimadzu Corporation, TGA-50H (trade name)), set in the device, and subjected to mass measurement under the following conditions.
· Gas flow rate: 50 ml/min of nitrogen
· Measurement conditions: after being allowed to stand at 25°C for 2 hours, the temperature is raised to 600°C at a temperature rising rate of 5 °C/min in a nitrogen atmosphere, and then allowed to stand at 600°C for 1 hour

The mass reduction amount (% by mass) calculated by the following equation can be defined as the content (% by mass) of the binder in the regenerated positive electrode active material. 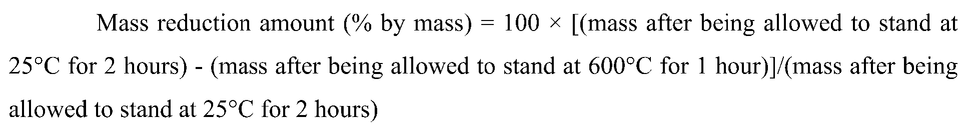 Mass reduction amount (% by mass) = 100 × [(mass after being allowed to stand at 25°C for 2 hours) - (mass after being allowed to stand at 600°C for 1 hour)]/(mass after being allowed to stand at 25°C for 2 hours)

The content of the conductive auxiliary agent in the regenerated positive electrode active material is preferably 0.5% by mass or less. The content of the conductive auxiliary agent in the regenerated positive electrode active material can be determined using energy dispersive X-ray spectroscopy (SEM-EDX).

A sample is prepared by applying the regenerated positive electrode active material to a conductive double-sided tape attached to a sample stage, SEM observation of the regenerated positive electrode active material is performed at an acceleration voltage of 1.5 kV using a field emission scanning electron microscope (FE-SEM) (JSM 7100F (trade name), manufactured by JEOL Ltd.), and elemental analysis is performed by automatic detection using an energy-dispersive X-ray spectroscope (EDX) (Noran System 7 (trade name), manufactured by Thermo Fisher Scientific Inc.,). The mass ratio of the amount of carbon to the total amount of elements detected by automatic detection is defined as the C amount (mass%) in the regenerated positive electrode active material. Since the regenerated positive electrode active material is a metal oxide, the C amount can be regarded as the amount of the conductive auxiliary agent.

The particle diameter of the regenerated positive electrode active material is not particularly limited. For example, the particle diameter can be set to 0.1 to 50.0 µm, preferably 0.5 to 30.0 µm, more preferably 1.0 to 20.0 µm, still more preferably 2.0 to 10.0 µm, and even still more preferably 2.0 to 6.0 µm.

The particle diameter of the regenerated positive electrode active material is a volume median diameter D50 in water, which is obtained by dispersing the regenerated positive electrode active material in water and measuring the particle diameter with a laser diffraction/scattering-type particle size distribution analyzer (for example, Particle LA-960V2 manufactured by Horiba Ltd.).

### [Lithium ion secondary battery]

The lithium ion secondary battery according to the embodiment of the present invention contains the regenerated positive electrode active material according to the embodiment of the present invention as a positive electrode active material, and is the same as a typical secondary battery except for this.

In the present invention, a lithium ion secondary battery in which the electrode active material layer does not contain an electrolytic solution is referred to as a first aspect, and a lithium ion secondary battery (quasi-solid lithium ion secondary battery) in which the electrode active material layer contains an electrolytic solution is referred to as a second aspect.

A lithium ion secondary battery according to a first aspect, which is a preferred embodiment of the present invention, has a configuration including a positive electrode, a negative electrode, and a separator disposed between the positive electrode and the negative electrode. The positive electrode has a positive electrode collector and a positive electrode active material layer in contact with the positive electrode collector; and the negative electrode has a negative electrode collector and a negative electrode active material layer in contact with the negative electrode collector. In the lithium ion secondary battery according to the first aspect of the present invention, the positive electrode active material layer is formed of the regenerated positive electrode active material according to the embodiment of the present invention. The lithium ion secondary battery according to the first aspect of the present invention functions as a secondary battery through charging and discharging by being filled with a non-aqueous electrolytic solution between the positive electrode and the negative electrode.

FIG. 1 is a cross-sectional view schematically showing a laminated structure of a general lithium ion secondary battery 10 according to the first aspect, including an operating electrode in a case of operating the battery. The lithium ion secondary battery 10 has a laminated structure including a negative electrode collector 1, a negative electrode active material layer 2, a separator 3, a positive electrode active material layer 4, and a positive electrode collector 5 in this order as viewed from the negative electrode side. The negative electrode active material layer 2 and the positive electrode active material layer 4 are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, during charging, electrons (e⁻) are supplied to the negative electrode side through an external circuit, and at the same time, lithium ions (Li⁺) move from the positive electrode through the electrolytic solution and are accumulated in the negative electrode. On the other hand, during discharging, the lithium ions (Li⁺) accumulated in the negative electrode return to the positive electrode side through the electrolytic solution, and electrons are supplied to an operating site 6. In an example shown in the drawing, an electric bulb is employed as the operating site 6 and is lit by discharging.

Subsequently, a basic configuration characteristic of a lithium ion secondary battery (quasi-solid lithium ion secondary battery) according to a second aspect of the present invention will be described. In the quasi-solid secondary battery, the electrode active material layer is formed in a slurry state containing an electrode active material and an electrolyte. Therefore, the configuration is different from that of the lithium ion secondary battery according to the first aspect in that the electrode active material layer is a layer formed of a slurry (suspension or dispersion liquid) in which the electrode active material is dispersed in a non-aqueous electrolytic solution.

That is, in the lithium ion secondary battery according to the first aspect, a coating liquid in which the electrode active material is dispersed in a medium not containing the electrolyte is prepared, the coating liquid is applied onto the collector to form a coating film, and the coating film is dried to form a thin film-shaped electrode active material layer. The coating liquid is usually blended with a binding material (binder), and a hard electrode active material layer in which electrode active material particles are firmly bound to each other is formed. Since the non-aqueous electrolytic solution is present on the electrode active material layer formed in this way (between the negative electrode active material layer and the positive electrode active material layer), the electrode active material layers are, as a whole, in a state of hard solid particle layers and are not slurry layers, even in a case where a portion into which the non-aqueous electrolytic solution can penetrate is present in a part thereof.

On the other hand, in the quasi-solid lithium ion secondary battery, the electrode active material layer is an electrode slurry layer in which solid particles containing the electrode active material and a conductive auxiliary agent are dispersed in a non-aqueous electrolytic solution obtained by dissolving a lithium salt (electrolyte) in a non-aqueous solvent. In a case where the electrode slurry layer functions as the electrode active material layer, a strong bonding property is not required between the electrode active material particles, and thus the electrode slurry layer generally does not contain a binding material. The basic layer configuration of the quasi-solid lithium ion secondary battery is the same as the layer configuration shown in FIG. 1, except that the electrode active material layer is the electrode slurry layer and the electrode slurry layer and the separator are in contact with each other.

In the lithium ion secondary battery according to the embodiment of the present invention, each material and member such as a conductive auxiliary agent, a positive electrode collector, a negative electrode active material, a negative electrode collector, and a separator is not particularly limited, except that the lithium ion secondary battery includes the regenerated positive electrode active material according to the embodiment of the present invention as the positive electrode active material. As these materials, members, and the like, those used for a typical secondary battery can be appropriately adopted. For the members and the manufacturing methods which are usually used for these secondary batteries, for example, JP2016-201308A, JP2005-108835A, JP2012-185938A, WO2018/135395A, and the like can be appropriately referred to.

### [Method for producing regenerated positive electrode active material]

The method for producing a regenerated positive electrode active material according to the embodiment of the present invention (also referred to as a production method according to the embodiment of the present invention) includes replenishing lithium in a lithium-deficient positive electrode active material (a) by mixing the lithium-deficient positive electrode active material (a), a lithium compound (b), and a reducing agent (c) such that a molar ratio of the lithium compound (b) to the reducing agent (c) is 0.13 ≤ (b)/(c) ≤ 2.80, thereby obtaining a regenerated positive electrode active material. This method is a method of replenishing lithium in the lithium-deficient positive electrode active material (a) using the lithium compound (b) as a lithium source.

According to the method for producing a regenerated positive electrode active material according to the embodiment of the present invention, the regenerated positive electrode active material according to the embodiment of the present invention can be efficiently produced under relatively mild conditions while suppressing the formation of the oxide film.

A preferred aspect of the production method according to the embodiment of the present invention includes replenishing lithium by mixing the lithium-deficient positive electrode active material (a) with a treatment liquid containing a lithium compound (b) and a reducing agent (c) in the solvent at the molar ratio. It is more preferable that the mixing is carried out by heating. In a case where the solvent contains water, the relithiation reaction of the lithium-deficient positive electrode active material (a) in this aspect is a so-called hydrothermal reaction. The regenerated positive electrode active material relithiated in this manner can be recovered from the reaction solution by a typical solid-liquid separation method such as filtration.

The production method according to the embodiment of the present invention may further include recovering the lithium-deficient positive electrode active material (a), washing and calcining the obtained regenerated positive electrode active material.

The production method according to the embodiment of the present invention will be described in more detail with the above-described preferred aspects as the center.

### <Recovery of lithium-deficient positive electrode active material (a)>

A method for recovering the lithium-deficient positive electrode active material (a) is not particularly limited as long as the lithium-deficient positive electrode active material can be recovered from the used lithium ion secondary battery.

In the method for recovering the lithium-deficient positive electrode active material (a), for example, a positive electrode taken out from the lithium ion secondary battery is immersed in a solvent, the collector and the positive electrode active material are separated by an external stimulus such as ultrasonic treatment, and the collector is taken out, whereby the lithium-deficient positive electrode active material (a) can be obtained as solid particles in the remaining suspension. For example, as shown in Examples described later, the lithium-deficient positive electrode active material (a) can be obtained by washing and drying the positive electrode taken out from the lithium ion secondary battery, further immersing the positive electrode in a solvent, subjecting the positive electrode to ultrasonic treatment, recovering a precipitate by centrifugation from a suspension obtained by taking out the collector, and drying the precipitate.

The solvent used for the immersion and the ultrasonic treatment may be appropriately selected, and examples thereof include N-methylpyrrolidone (NMP), N-ethylpyrrolidone, and N,N-dimethylformamide.

In a case where the positive electrode from which the lithium-deficient positive electrode active material (a) is taken out contains a binder, it is preferable that the immersion and the ultrasonic treatment are carried out in a solvent capable of dissolving the binder. Examples of such a solvent include N-methylpyrrolidone (NMP), N-ethylpyrrolidone, and N,N-dimethylformamide.

The immersion is preferably carried out for a time in which a component constituting the positive electrode active material layer, particularly a binder in a case of containing a binder, is sufficiently compatible with the solvent. The immersion time is preferably 10 minutes or more, and it is also preferably 20 minutes or more. Since the recovery effect does not change even in a case where the immersion is continued for a long time once the immersion has been carried out for a certain period of time, the immersion time is preferably 20 minutes to 1 hour. The immersion may be carried out at room temperature or under heating.

The conditions of the ultrasonic treatment are not particularly limited as long as the positive electrode collector can be separated from the positive electrode and the solid particles (solid particles mainly containing the positive electrode active material) constituting the positive electrode active material layer can be obtained in a suspended state in the solvent. For example, the ultrasonic treatment can be carried out for 10 to 60 minutes.

The centrifugation may be any centrifugation so long as the lithium-deficient positive electrode active material (a) can be recovered as a precipitate from the suspension. The centrifugation conditions may be, for example, 2,000 to 4,000 rpm for 5 to 30 minutes.

The drying is an operation of removing the solvent from the recovered lithium-deficient positive electrode active material (a). The drying conditions can be, for example, 80°C to 200°C for 5 to 24 hours. In addition, the drying may be carried out under reduced pressure.

By the immersion, the ultrasonic treatment, and the centrifugation, most of the binder and the conductive auxiliary agent can be removed. However, usually, a small amount of the binder and/or the conductive auxiliary agent remains even by the immersion, the ultrasonic treatment, and the centrifugation. Therefore, the lithium-deficient positive electrode active material (a) subjected to these steps usually contains a small amount of the binder and/or the conductive auxiliary agent.

### <Relithiation>

From the viewpoint of suppressing the formation of the oxide film and increasing the relithiation rate of the regenerated positive electrode active material, a molar ratio of the lithium compound (b) to the reducing agent (c) used for the relithiation of the lithium-deficient positive electrode active material (a) is preferably 0.25 ≤ (b)/(c) ≤ 2.50, more preferably 0.35 ≤ (b)/(c) ≤ 2.45, still more preferably 0.35 ≤ (B)/(C) ≤ 2.40, and even still more preferably 0.50 ≤ (b)/(c) ≤ 2.30.

The amount of the lithium compound (b) to be blended is not particularly limited, but from the viewpoint of suppressing the formation of the oxide film and increasing the relithiation rate of the obtained regenerated positive electrode active material, the amount of the lithium compound (b) to be blended is preferably 1 molar equivalent or more (1 mol or more as lithium atoms contained in the lithium compound (b) with respect to 1 mol of the lithium deficiency amount), more preferably 2 molar equivalents or more, still more preferably 5 molar equivalents or more, even still more preferably 10 molar equivalents or more, and even still more preferably 15 molar equivalents or more, with respect to the lithium deficiency amount (mol) of the lithium-deficient positive electrode active material (a). The upper limit thereof is practically 400 molar equivalents, and it is preferably 380 molar equivalents or less, more preferably 300 molar equivalents or less, and still more preferably 200 molar equivalents or less. Therefore, the amount of the lithium compound (b) to be blended is preferably 1 to 400 molar equivalents, more preferably 2 to 400 molar equivalents, still more preferably 5 to 400 molar equivalents, even still more preferably 10 to 380 molar equivalents, even still more preferably 15 to 300 molar equivalents, and even still more preferably 15 to 200 molar equivalents, with respect to the lithium deficiency amount (mol).

The lithium deficiency amount of the lithium-deficient positive electrode active material (a) can be calculated from the lithium deficiency rate (%) of the lithium-deficient positive electrode active material (a). The lithium deficiency rate can be measured by the method described in Examples.

It is preferable that the lithium compound (b) and the reducing agent (c) are dissolved in a solvent to be in a form of a solution (treatment liquid) and then reacted with the lithium-deficient positive electrode active material (a).

Therefore, as the solvent, a solvent capable of dissolving the lithium compound (b) and the reducing agent (c) is preferable, and an organic solvent, an inorganic solvent, or a combination thereof can be used. The solvent is preferably water (preferably ultrapure water) or a combination of water and a water-soluble organic solvent.

In the mixing of the treatment liquid with the lithium-deficient positive electrode active material (a), the concentration of the lithium-deficient positive electrode active material (a) in the mixture can be 0.01 to 1.20 mol/L, 0.03 to 1.00 mol/L, or 0.03 to 0.80 mol/L.

The concentration of the lithium compound (b) in the mixture can be 0.05 to 5.00 mol/L, or 0.10 to 4.00 mol/L in terms of the amount of lithium.

The concentration of the reducing agent (c) in the mixture can be 0.10 to 3.00 mol/L, 0.40 to 3.00 mol/L, or 0.50 to 2.00 mol/L.

The reaction temperature (the temperature of the mixture) of the lithium-deficient positive electrode active material (a), the lithium compound (b), and the reducing agent (c) is not particularly limited, and is preferably 60°C to 160°C, more preferably 60°C to 140°C, still more preferably 60°C to 120°C, and even more preferably 80°C to 100°C.

The reaction time of the lithium-deficient positive electrode active material (a), the lithium compound (b), and the reducing agent (c) depends on the reaction temperature, but is preferably 5 to 20 hours, more preferably 7 to 18 hours, and still more preferably 10 to 15 hours.

The reaction of the lithium-deficient positive electrode active material (a), the lithium compound (b), and the reducing agent (c) is preferably carried out in a pressure-resistant container. This is because the pressure in the container may increase during the reaction.

The lithium compound (b) acts as a lithium source for replenishing lithium in the lithium-deficient positive electrode active material (a).

Examples of the lithium compound (b) include lithium sulfate, lithium carbonate, lithium bicarbonate, lithium hydroxide, lithium nitrate, lithium acetate, lithium oxalate, lithium phosphate, lithium halide, lithium fluoride, and lithium oxide. Preferred specific examples thereof include lithium hydroxide (LiOH), lithium sulfate (Li₂SO₄), lithium chloride (LiCl), lithium carbonate (Li₂CO₃), lithium hydrogen carbonate (LiHCO₃), lithium iodide (LiI), lithium fluoride (LiF), lithium acetate (LiCH₃COO), and lithium oxide (Li₂O); and LiCl and/or LiOH is preferable, and LiOH is more preferable.

The lithium compound (b) is preferably a lithium compound soluble in water.

The reducing agent (c) acts as a reducing agent for the lithium-deficient positive electrode active material (a). As the reducing agent (c), a carboxylic acid compound such as citric acid, an ascorbic acid compound such as ascorbic acid and a salt thereof, a phosphinic acid compound such as phosphinic acid and a salt thereof, sodium hydrogen sulfite, or the like can be used; and a carboxylic acid compound and an ascorbic acid compound are preferable, citric acid and ascorbic acid are more preferable, and citric acid is still more preferable.

The reducing agent (c) is preferably water-soluble.

### <Another step>

In the production method according to the embodiment of the present invention, the solid particles may be collected by filtration from the reaction solution after the relithiation treatment, and washed to remove the lithium compound (b) and the reducing agent (c) which are not consumed during the relithiation treatment, the conductive auxiliary agent, by-products formed by the relithiation treatment, and the like.

In the production method according to the embodiment of the present invention, after the relithiation treatment, the crystalline state of the regenerated positive electrode active material may be controlled by calcination, or the calcination may not be performed. By performing the calcination, defects in the crystal of the regenerated positive electrode active material can be reduced. By reducing the defects in the crystal, the discharge capacity retention rate in a case of being exposed to a high temperature can be further increased in a case of being incorporated into a lithium ion secondary battery.

The production method according to the embodiment of the present invention can include any one of the washing or the calcination as a post-treatment of the relithiation, and can also include both the washing and the calcination.

The filtration may be performed by a normal filtration treatment as long as solid particles can be recovered from the treatment liquid, and is preferably performed by vacuum filtration.

The washing can be performed by washing the solid particles obtained by the relithiation with a washing solution. By the washing, even in a case where a trace amount of the conductive auxiliary agent remains (in a case of recovering the lithium-deficient positive electrode active material (a)), the conductive auxiliary agent can be removed due to a difference in specific gravity or particle size from the regenerated positive electrode active material. The method for removing the conductive auxiliary agent is not limited, and flotation or centrifugation can be used.

For example, the solid particles can be suspended in the washing solution and centrifuged to recover the solid particles. After the washing, the solid particles can be dried.

As the washing solution, water is preferable, and pure water is preferable.

The conditions for the suspension are not particularly limited. The solid particles and the washing solution can be mixed and suspended.

The rotation speed during the centrifugation is not particularly limited, and is preferably 1,000 to 5,000 rpm, more preferably 1,500 to 4,000 rpm, and still more preferably 1,800 to 3,000 rpm. The time during the centrifugation is not particularly limited, and is preferably 1 to 10 minutes and more preferably 2 to 8 minutes.

It is preferable that the solid particles after the washing are further dried. The drying can be performed, for example, by holding the solid particles at 120°C for 24 hours.

The above-described calcination can be performed after the relithiation treatment. The calcination may be performed after the above-described washing. By performing the calcination, the crystallinity of the regenerated positive electrode active material can be controlled.

The above-described calcination is preferably performed at 400°C or higher, more preferably performed at 500°C or higher, and still more preferably performed at 550°C or higher. The upper limit of the calcining temperature is practically 900°C or lower, and preferably 650°C or lower. Therefore, the calcining temperature is preferably 400°C to 900°C, more preferably 500°C to 900°C, still more preferably 500°C to 650°C, and even still more preferably 550°C to 650°C. The calcining time is preferably 1 to 5 hours, more preferably 1 to 3 hours, and still more preferably 1 to 1.5 hours.

The calcination may be performed in an air atmosphere or in an inert gas (for example, argon, helium, nitrogen, or the like) atmosphere. In the present invention, it is preferable to perform the calcination in a nitrogen atmosphere.

In a case of performing the calcination, it is preferable not to use a lithium compound (Li₂CO₃ or the like) other than the regenerated positive electrode active material. The reason for this is that, in this manner, it is possible to avoid the oxidation of the regenerated positive electrode active material due to the oxygen source contained in the impurities and the like. Examples

The present invention will be described in more detail based on Examples, but the present invention is not limited to and interpreted based on these Examples, except as defined in the present invention.

In addition, "room temperature" means 25°C. "Parts" and "%" representing the composition are based on mass unless otherwise specified.

### [Preparation of lithium-deficient positive electrode active material (a)]

A lithium ion secondary battery was prepared, and the obtained lithium ion secondary battery was charged and discharged to deplete lithium from the positive electrode active material, thereby recovering a lithium-deficient positive electrode active material (a). The details thereof will be described.

### <Battery production (first aspect): Examples 1 and 3 to 22 and Comparative Examples 1 to 4>

### 1. Preparation of non-aqueous electrolytic solution 1

A mixed solvent in which ethylene carbonate (EC), dimethyl carbonate (DMC), and ethyl methyl carbonate (EMC) were mixed at a mass ratio of EC:DMC:EMC = 3:4:3 was blended with LiPF₆ as a lithium salt to a concentration of 1 M to prepare a non-aqueous electrolytic solution (non-aqueous electrolytic solution 1).

### 2. Production of positive electrode

A positive electrode slurry P1 was produced by mixing 95.7 parts by mass of lithium iron phosphate (LiFePO₄) (product code: L0386, manufactured by Tokyo Chemical Industry Co., Ltd.) as a positive electrode active material, 4.3 parts by mass of acetylene black (AB) (Li-100 (trade name), specific surface area = 69 m²/g, manufactured by Denka Company Limited) as a conductive auxiliary agent, polyvinylidene fluoride (PVdF) as a binder, and N-methylpyrrolidone (NMP) as a solvent (concentration of components insoluble in the solvent: 75.3% by mass).

The amount of the binder was set to 6 parts by mass with respect to 100 parts by mass of the positive electrode active material.

The above-described positive electrode slurry P1 was applied to one surface of a positive electrode collector (aluminum foil) having a thickness of 12 µm at a thickness of 125 µm, and the dispersion medium was removed at 240°C. Thereafter, the coated positive electrode collector was pressed at a pressure of 3.2 t using a roll press machine to obtain a sheet-like positive electrode including the positive electrode collector and the positive electrode active material layer. The thickness of the positive electrode was about 80 µm.

### 3. Production of negative electrode

A negative electrode slurry N1 was obtained by mixing 95.7 parts by mass of artificial graphite (UF-G5 (trade name), manufactured by Showa Denko K.K., average particle diameter (spherical average particle diameter) of 3 µm) as a negative electrode active material, 4.3 parts by mass of acetylene black (AB) (Li-100 (trade name), manufactured by Denka Company Limited) as a conductive auxiliary agent, NMP, a styrene-butadiene copolymer (SBR) as a binder, and carboxymethyl cellulose (CMC) as a thickener (concentration of components insoluble in the solvent: 70.6% by mass).

The amount of the binder was set to 1 part by mass with respect to 100 parts by mass of the negative electrode active material, and the amount of the thickener was set to 1 part by mass with respect to 100 parts by mass of the negative electrode active material.

The negative electrode slurry N1 was applied to one surface of a negative electrode collector (copper foil) having a thickness of 12 µm at a thickness of 120 µm, and the dispersion medium was removed at 240°C. Thereafter, the coated negative electrode collector was pressed at a pressure of 2 t using a roll press machine to obtain a sheet-like negative electrode including the negative electrode collector and the negative electrode active material layer. A thickness of the negative electrode active material layer in the negative electrode was approximately 80 µm.

### 4. Production of battery

The obtained positive electrode and negative electrode were laminated with a separator (thickness: 20 µm) manufactured by W-SCOPE Co., Ltd. interposed therebetween to form a laminate consisting of a positive electrode collector, a positive electrode active material layer, a separator, a negative electrode active material layer, and a negative electrode collector. An aluminum tab was attached to an end part of the positive electrode collector, and a nickel tab was attached to an end part of the negative electrode collector, each by ultrasonic welding. A battery assembly was produced by accommodating the laminate in a laminate container. After the non-aqueous electrolytic solution 1 was injected with an injection port kept open, the injection port was sealed and the case was hermetically sealed, thereby obtaining a lithium ion secondary battery.

### <Battery production (first aspect): Example 23>

A positive electrode slurry P2 was produced in the same manner as in 2. Production of positive electrode described above, except that lithium manganese phosphate (LiMnPO₄) was used instead of the lithium iron phosphate as the positive electrode active material, and a positive electrode was obtained.

A lithium ion secondary battery was produced in the same manner as in 4. Production of battery, except that the positive electrode was used.

### <Battery production (second aspect): Example 2>

### 1. Preparation of positive electrode slurry P3

A positive electrode slurry P3 was obtained by mixing 99.9 parts by mass of the lithium iron phosphate, 0.1 parts by mass of Ketjen black (Carbon ECP (trade name), manufactured by Lion Specialty Chemicals Co., Ltd.) as a conductive auxiliary agent, and the non-aqueous electrolytic solution 1 at 1,250 rpm for 90 seconds with a centrifugal planetary mixer (manufactured by THINKY Corporation, AWATORI RENTARO (trade name)). The amount of the non-aqueous electrolytic solution 1 in the positive electrode slurry P3 was 22.9 mL per 100 g of the total amount of the positive electrode active material and the conductive auxiliary agent in the positive electrode slurry P3.

### 2. Preparation of negative electrode slurry N3

A negative electrode slurry N3 was obtained by mixing 98.2 parts by mass of artificial graphite (UF-G30 (trade name), manufactured by Showa Denko K.K.), 1.8 parts by mass of carbon black (LITX300 (trade name), manufactured by Cabot Corporation) as a conductive auxiliary agent, and the non-aqueous electrolytic solution 1 at 1,250 rpm for 90 seconds with a centrifugal planetary mixer (manufactured by THINKY Corporation, AWATORI RENTARO (trade name)). The amount of the non-aqueous electrolytic solution 1 in the negative electrode slurry N3 was 37.7 mL per 100 g of the total amount of the negative electrode active material and the conductive auxiliary agent in the negative electrode slurry N3.

### 3. Production of quasi-solid secondary battery

A quasi-solid secondary battery was produced with reference to JP2016-500465A (Examples 10 and 11). Details are described below.

The positive electrode slurry P3 was applied onto an aluminum foil as a positive electrode collector such that a thickness was 500 µm and an area was 80 cm², thereby forming a positive electrode consisting of a positive electrode collector and a positive electrode active material layer.

Similarly, the negative electrode slurry N3 was applied onto a copper foil as a negative electrode collector such that a thickness was 500 µm and an area was 85 cm², thereby forming a negative electrode consisting of a negative electrode collector and a negative electrode active material layer.

A separator (thickness: 20 µm) manufactured by W-SCOPE CO., LTD. was cut to have an area of 90 cm².

The separator was laminated on the negative electrode such that the negative electrode was located within the size of the separator, and the positive electrode was laminated thereon such that the positive electrode was located within the size of the negative electrode, thereby producing a laminate of a negative electrode collector, a negative electrode active material layer (slurry), a separator, a positive electrode active material layer (slurry) and a positive electrode collector. The production of the laminate was completed in approximately 1 minute in order to avoid the volatilization of the non-aqueous electrolytic solution.

Tabs were attached by ultrasonic welding to the uncoated portion of the positive electrode slurry on the aluminum foil and the uncoated portion of the negative electrode slurry on the copper foil, respectively, of the laminate, and the laminate was wrapped in an aluminum laminate and hermetically sealed with a vacuum sealer to produce a lithium ion secondary battery (quasi-solid secondary battery) for an evaluation test.

### <Charging and discharging of lithium ion secondary battery>

Each of the obtained lithium ion secondary batteries was charged and discharged as follows to form the lithium-deficient positive electrode active material (a) in each positive electrode active material layer.

The obtained lithium ion secondary battery was charged at 0.1 C using a charging and discharging evaluation device (TOSCAT-3000 (trade name), manufactured by Toyo System Corporation) until the voltage reached 3.6 V, and then discharged until the voltage reached 2.0 V. This cycle was set as one cycle of charging and discharging, and the charging and discharging were performed 200 times. Thereafter, the charging and discharging were further repeated under the same conditions such that each positive electrode active material had the lithium deficiency rate shown in Table 1.

### [Recovery of lithium-deficient positive electrode active material (a)]

The lithium-deficient positive electrode active material (a) was recovered from the positive electrode of the lithium ion secondary battery after the charging and discharging as follows.

The lithium ion secondary battery after the charging and discharging was disassembled, and the positive electrode was taken out. The taken-out positive electrode was washed with dimethyl carbonate (DMC) and then dried. The dried positive electrode was immersed in NMP for 30 minutes, and then subjected to an ultrasonic treatment in NMP for 20 minutes to dissolve the binder, and the collector was separated and taken out to obtain a suspension containing the lithium-deficient positive electrode active material (a). The suspension was centrifuged at 3,500 rpm for 5 minutes to recover a precipitate, and the precipitate was dried at 120°C for 12 hours. In this manner, the lithium-deficient positive electrode active material (a) was obtained. In the above-described centrifugation, the conductive auxiliary agent did not precipitate, and the conductive auxiliary agent and the lithium-deficient positive electrode active material (a) could be separated.

### [Determination of lithium deficiency rate of lithium-deficient positive electrode active material (a)]

The lithium deficiency rate of the lithium-deficient positive electrode active material (a) was determined by elemental analysis as follows.

The measurement was performed by an absolute calibration curve method using an inductively coupled plasma optical emission spectroscope (ICP-OES) (Optima 7300DV (trade name), manufactured by PerkinElmer, Inc.).

20 mg of the lithium-deficient positive electrode active material (a) was weighed, 60% nitric acid was added thereto, and the mixture was subjected to microwave digestion. After the digestion, the volume was adjusted to 50 mL with ultrapure water, and the resulting solution was further diluted 100-fold to prepare a measurement sample.

The lithium deficiency rate was calculated from the molar ratio of Fe to Li obtained by the ICP-OES measurement. However, in Example 23, the lithium deficiency rate was calculated from the molar ratio of Mn to Li.

Even in a case where the lithium-deficient positive electrode active material (a) contains a transition metal element other than Fe and Mn, the lithium deficiency rate can be determined in the same manner.

### [Relithiation]

Each of the lithium-deficient positive electrode active materials (a) obtained above was relithiated as follows.

### <Relithiation: hydrothermal reaction>

### 1. Preparation of treatment liquid

The lithium compound (b) and the reducing agent (c) were dissolved in ultrapure water such that the contents thereof were as shown in Table 1, and each treatment liquid used for the relithiation was prepared.

### 2. Relithiation

Each of the lithium-deficient positive electrode active materials (a) shown in Table 1 and 40 mL of each of the treatment liquids shown in Table 1 were mixed in a pressure-resistant container (manufactured by San-Ai Kagaku Co., Ltd., HU-100 (trade name)) and hermetically sealed. In this way, the lithium-deficient positive electrode active material (a), the lithium compound (b), and the reducing agent (c) were mixed. The concentration of the lithium-deficient positive electrode active material (a) in the mixture is shown in Table 1. Thereafter, the mixture was held at the temperature and for the time shown in Table 1 to carry out a hydrothermal reaction. The solid particles after the hydrothermal reaction were separated by vacuum filtration to obtain each of the regenerated positive electrode active materials.

### <Water washing>

The regenerated positive electrode active material separated and recovered by the vacuum filtration was washed with pure water, transferred to a centrifuge tube, and suspended in pure water. Next, the suspension was subjected to centrifugation for 5 minutes at a rotation speed of 2,000 rpm using a centrifuge, and the precipitate was recovered and dried at 120°C for 24 hours. In this way, the regenerated positive electrode active material was washed with water.

### <Calcination>

The regenerated positive electrode active material after <Water washing> was calcined using a tabletop vacuum gas replacement furnace (KDF-75 Plus (trade name), manufactured by DENKEN-HIGHDENTAL Co., Ltd.). The temperature was raised to 600°C at 5 °C/min in a nitrogen atmosphere, held for 1 hour, and then returned to room temperature. In this way, the regenerated positive electrode active material was calcined to obtain a calcined regenerated positive electrode active material.

The regenerated positive electrode active material of Example 21 was not calcined.

In the column of "Calcination" in Table 1, "Yes" is described in a case where calcination was performed, and "No" is described in a case where calcination was not performed. Hereinafter, for convenience, the calcined regenerated positive electrode active material obtained by performing calcination and the regenerated positive electrode active material obtained by not performing calcination are collectively referred to as "regenerated positive electrode active material".

### <Evaluation of relithiation rate>

For each of the regenerated positive electrode active materials obtained as described above, a peak area of LiFePO₄ at 20 = 17.1 degrees and a peak area of FePO₄ at 20 = 18.0 degrees were obtained by X-ray diffraction (XRD), and the relithiation rate was obtained by applying the peak areas to the following equation. $Relithiation rate = {LiFePO}_{4} peak area / \left({LiFePO}_{4} peak area+{FePO}_{4} peak area\right)$

MiniFlex (trademark) 600 (manufactured by Rigaku Corporation) was used as the X-ray diffractometer.

For the regenerated positive electrode active material obtained in Example 23, a peak area of LiMnPO₄ at 2θ = 17.1 degrees and a peak area of MnPO₄ at 2θ = 18.0 degrees were obtained by X-ray diffraction (XRD), and the relithiation rate was obtained by applying the peak areas to the following equation.$Relithiation rate = {LiMnPO}_{4} peak area / \left({LiMnPO}_{4} peak area + {MnPO}_{4} peak area\right)$

In a case where the lithium-deficient positive electrode active material (a) contains a transition metal element other than Fe and Mn, the relithiation rate can be obtained in the same manner.

### <Evaluation of oxide film: X-ray photoelectron spectroscopy (XPS) measurement>

For each of the regenerated positive electrode active materials obtained as described above, X-ray photoelectron spectroscopy (XPS) measurement was performed as follows in order to evaluate the formation state of the oxide film on the surface of each regenerated positive electrode active material, and the ratio of the peak intensities was calculated.

20 mg of each of the regenerated positive electrode active materials obtained as described above was put into a powder sample holder to prepare a sample (powder film).

For the X-ray photoelectron spectroscopy (XPS) measurement, Kratos Axis Ultra spectrometer (trade name, manufactured by Shimadzu Corporation) equipped with a focused monochromatized AlKα radiation source (hυ = 1,486.6 eV) as an X-ray source was used. The measurement was performed at a photoelectron take-off angle of 45°, and the positions and areas of the peaks were optimized by a weighted least squares fitting method using a linear combination of 80% Gaussian and 20% Lorentzian. In the oxygen 1s core-level spectrum, a peak intensity (I_{B}) in a region where a peak top was 528 eV or more and less than 530 eV and a peak intensity (I_{A}) in a region where a peak top was 530 eV or more and less than 535 eV were obtained, and a value of a ratio (I_{B}/I_{A}) between the peak intensities was determined.

### [Evaluation of battery]

### <Production of lithium ion secondary battery>

A secondary battery using the regenerated positive electrode active material was produced in the same manner as in <Production of battery (first aspect): Examples 1 and 3 to 22 and Comparative Examples 1 to 4>, <Battery production (first aspect): Example 23>, and <Battery production (second aspect): Example 2> in [Preparation of lithium-deficient positive electrode active material (a)] described above, except that each of the regenerated positive electrode active materials was used in <Production of battery (first aspect): Examples 1 and 3 to 22 and Comparative Examples 1 to 4>, <Battery production (first aspect): Example 23>, and <Battery production (second aspect): Example 2> in [Preparation of lithium-deficient positive electrode active material (a)] described above.

### <Evaluation of output characteristics after high-temperature storage>

A change in discharge capacity in a case where the lithium ion secondary battery containing the regenerated positive electrode active material was exposed to a high temperature was examined as follows.

An output characteristic test was performed on the lithium ion secondary battery using the regenerated positive electrode active material produced above under the following conditions. Specifically, the reference discharge capacity was measured by charging to 3.9 V by CC-CV charging and discharging to 2.0 V by CC discharging under the following conditions at normal temperature. Thereafter, each of the lithium ion secondary batteries was stored at 80°C for 24 hours (high-temperature storage). Thereafter, the temperature was returned to normal temperature, and the output evaluation discharge capacity was measured by charging to 3.9 V by CC-CV charging and discharging to 2.0 V by CC discharging under the following conditions. Furthermore, a discharge capacity retention rate was calculated from the following equation, and the evaluation was performed by applying the calculated value to the following evaluation standard.

### · Reference discharge capacity

CC-CV charging: current value of 250 mA, upper limit voltage of 3.9 V, termination current value of 25 mA
CC discharging: current value of 250 mA, termination voltage value of 2.0 V
· Output evaluation discharge capacity
CC-CV charging: current value of 250 mA, upper limit voltage of 3.9 V, termination current value of 25 mA
CC discharging: current value of 1,000 mA, termination voltage value of 2.0 V 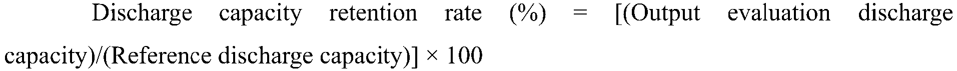 Discharge capacity retention rate (%) = [(Output evaluation discharge capacity)/(Reference discharge capacity)] × 100

### - Evaluation standard -

5: 80% or more
4: 70% or more and less than 80%
3: 65% or more and less than 70%
2: 60% or more and less than 65%
1: less than 60%

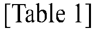

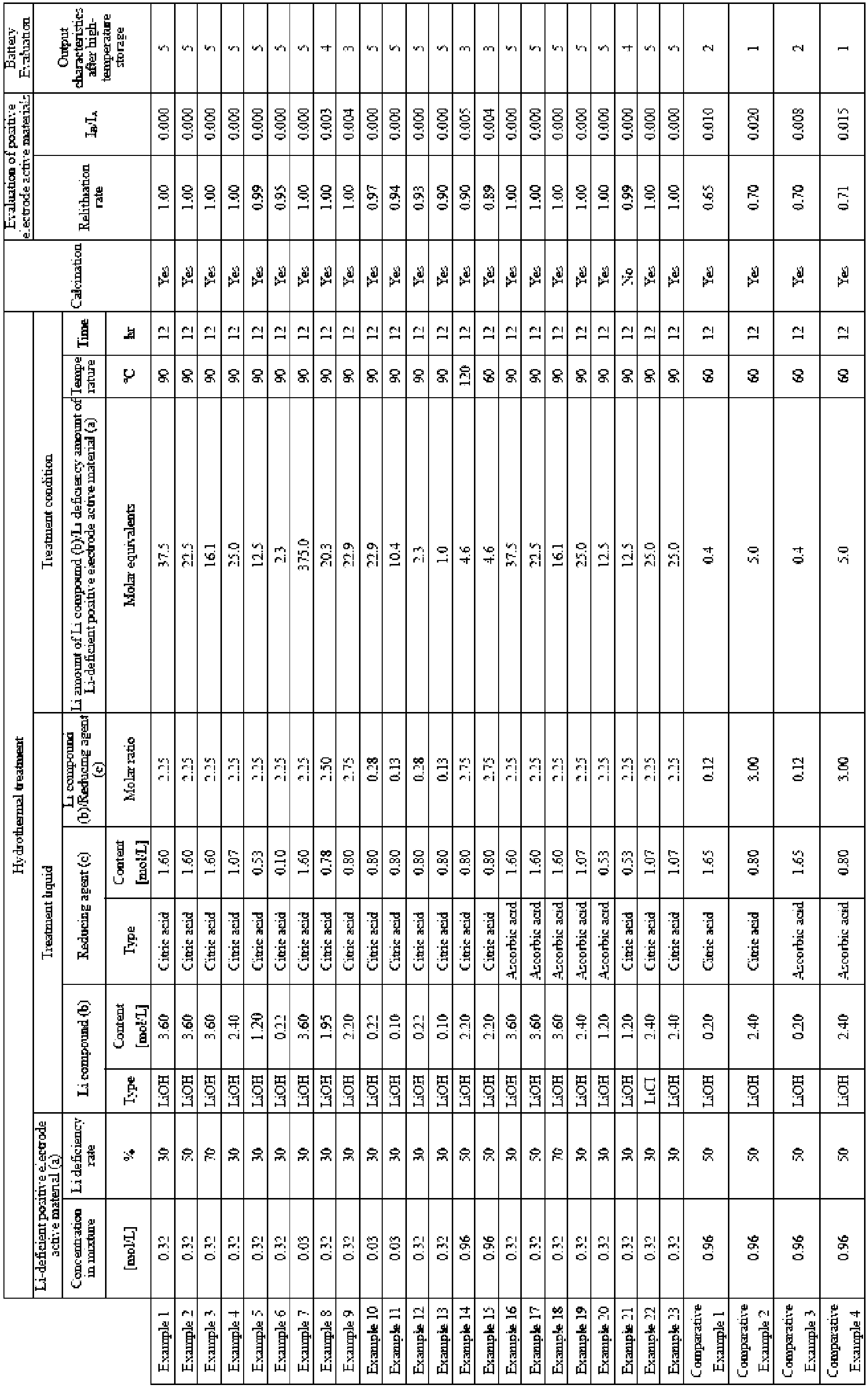

### <Note in Table 1>

"Li-deficient positive electrode active material (a)": lithium-deficient positive electrode active material (a)
"Li deficiency rate": lithium deficiency rate
"Li compound (b)": lithium compound (b)

All of the regenerated positive electrode active materials of Comparative Examples 1 to 4 were regenerated under a condition that did not satisfy 0.13 ≤ (b)/(c) ≤ 2.80, and in the oxygen 1s core-level spectrum measured by the XPS measurement, a value of the ratio of the peak intensity in a region of 528 eV or more and less than 530 eV to the peak intensity in a region of 530 eV or more and less than 535 eV was more than 0.005. In the lithium ion secondary battery formed of these regenerated positive electrode active materials, the discharge capacity retention rate was less than 65%. In addition, in all of the regenerated positive electrode active materials of these comparative examples, the relithiation rate was as low as 0.71 or less.

From these comparative examples, it was found that, in a case where the molar ratio of the reducing agent (c) to the lithium compound (b) was too large or too small with respect to the above-described range, it was difficult to sufficiently suppress the formation of the oxide film to obtain the regenerated positive electrode active material. In Comparative Examples 1 and 3, in which the amount of the reducing agent (c) was excessively large, formation of the oxide film was slightly suppressed; however, it is considered that the discharge capacity retention rate decreased because the electrode active material layer was gelled due to oxidation of the reducing agent (c) that had not been consumed during relithiation at the time of the high-temperature storage treatment.

On the other hand, the regenerated positive electrode active materials of Examples 1 to 23 were regenerated under a condition that the molar ratio of the lithium compound (b) to the reducing agent (c) satisfied 0.13 ≤ (b)/(c) ≤ 2.80, and in the oxygen 1s core-level spectrum measured by the XPS measurement, a value of the ratio of the peak intensity in a region of 528 eV or more and less than 530 eV to the peak intensity in a region of 530 eV or more and less than 535 eV was 0.005 or less. In the lithium ion secondary battery formed of these regenerated positive electrode active materials, the discharge capacity retention rate was 65% or more. According to the regenerated positive electrode active material of the present invention, it was found that it is possible to obtain a lithium ion secondary battery having an excellent discharge capacity retention rate by suppressing the formation of the oxide film. In addition, according to the production method of the present invention, it was found that a high-quality regenerated positive electrode active material can be obtained under relatively mild conditions.

The present invention has been described using the embodiments; however, unless specified otherwise, any of the details of the above description is not intended to limit the present invention and can be construed in a broad sense within a range not departing from the concept and scope of the present invention disclosed in the accompanying claims.

This application claims priority based on JP2023-219924 filed on December 26, 2023, the contents of which are incorporated herein by reference as part of the present specification. Explanation of References

10: lithium ion secondary battery
1: negative electrode collector
2: negative electrode active material layer
3: separator
4: positive electrode active material layer
5: positive electrode collector
6: operating site (electric bulb)

## Claims

1. A regenerated positive electrode active material obtained by replenishing lithium in a lithium-deficient positive electrode active material (a),
wherein, in an oxygen 1s core-level spectrum measured by XPS measurement of the regenerated positive electrode active material, a value of a ratio of a peak intensity in a region of 528 eV or more and less than 530 eV to a peak intensity in a region of 530 eV or more and less than 535 eV is 0.005 or less.

2. The regenerated positive electrode active material according to claim 1, wherein the lithium-deficient positive electrode active material (a) has an olivine-type structure.

3. The regenerated positive electrode active material according to claim 1, wherein the lithium-deficient positive electrode active material (a) is an active material represented by Li₁₋ₓM¹PO₄, x represents a lithium deficiency amount and satisfies 0 < x ≤ 1, and M¹ represents at least one element selected from Fe, Mn, and Co.

4. A lithium ion secondary battery comprising the regenerated positive electrode active material according to any one of claims 1 to 3.

5. A method for producing a regenerated positive electrode active material, the method comprising replenishing lithium in a lithium-deficient positive electrode active material (a) by mixing the lithium-deficient positive electrode active material (a), a lithium compound (b), and a reducing agent (c) such that a molar ratio of (b) to (c) is 0.13 ≤ (b)/(c) ≤ 2.80 to obtain the regenerated positive electrode active material.

6. The method for producing a regenerated positive electrode active material according to claim 5, wherein an amount of the lithium compound (b) to be blended is 10 molar equivalents or more with respect to a lithium deficiency amount of the lithium-deficient positive electrode active material (a).

7. The method for producing a regenerated positive electrode active material according to claim 5, wherein the lithium-deficient positive electrode active material (a), the lithium compound (b), and the reducing agent (c) are heated at 80°C to 100°C.

8. The method for producing a regenerated positive electrode active material according to claim 7, wherein solid particles obtained after the heating are filtered and washed.

9. The method for producing a regenerated positive electrode active material according to claim 7 or 8, wherein solid particles obtained after the heating are calcined at 400°C or higher.

10. The method for producing a regenerated positive electrode active material according to claim 5, wherein the lithium-deficient positive electrode active material (a) has an olivine-type structure.

11. The method for producing a regenerated positive electrode active material according to claim 5, wherein the lithium-deficient positive electrode active material (a) is a positive electrode active material represented by Li₁₋ₓM¹PO₄, x represents a lithium deficiency amount and satisfies 0 < x ≤ 1, and M¹ represents at least one element selected from Fe, Mn, and Co.
